# EUROPEAN PATENT SPECIFICATION

(11) **EP 2 536 207 B1**
(45) Date of publication and mention of the grant of the patent: **09.08.2017**
(21) Application number: 11169963.3
(22) Date of filing: 15.06.2011
(51) Int. Cl.: H04W 36/00, H04W 88/02

(54) **Event reporting in a communication network**
Ereignisbericht in einem Kommunikationsnetzwerk
Rapport d'événements dans un réseau de communication

(43) Date of publication of application: 19.12.2012
(73) Proprietor: Telefonaktiebolaget LM Ericsson (publ), 164 83 Stockholm (SE)
(72) Inventor: Nader, Ali, 212 42 Malmö (SE); Henningsson, Håkan, 224 74 Lund (SE)
(74) Representative: Ericsson

(56) References cited:
- EMAI DISCUSSION RAPPORTEUR (NOKIA SIEMENS NETWORKS): "Report on email discussion [69#30] trying to progress main MDT open issues", 3GPP DRAFT; R2-102082, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Beijing, china; 20100412, 8 April 2010 (2010-04-08), XP050422724, [retrieved on 2010-04-08]
- EMAIL DISCUSSION RAPPORTEUR (QUALCOMM INCORPORATED): "MDT considerations", 3GPP DRAFT; R2-101519_[68B#16]_MDT_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, US; 20100222, 17 February 2010 (2010-02-17), XP050450908, [retrieved on 2010-02-17]

## Description

### Technical Field

The invention relates to event reporting in a communication network, and especially to a method of handling network disturbances in a communication network.

### BACKGROUND

Cellular communications systems for providing communications services to mobile terminals and user equipment are known and widely used. The cellular structure of such systems allows a user equipment connected to one cell (the so-called serving cell) of the system to switch to a neighbouring cell, e.g. when a neighbouring cell becomes more suitable to be connected to due to e.g. a movement of the user equipment. This process of switching cells is normally referred to as handover (HO). To this end, a user equipment connected to a network node makes on a regular basis measurements on the serving as well as detected neighbouring cells in order to find the most suitable cell to be connected to. In case another cell than the currently serving cell becomes strong, a HO is triggered and either the terminal informs the cellular network to change serving cell, or the network command the user equipment to connect to a certain cell.

The optimization of a network with respect to the handover areas, as well as with respect to other coverage problematic areas, is performed using measurement drive tests. More advanced techniques are known as Minimization of Drive Tests (MDT). An examples of prior art is 3GPP document R2-102082, "Report on email discussion [69#30] trying to progress main MDT open issues". In case the reporting of the measurement results is configured by the network, such as in a 3GPP network, the measurement results may be evaluated and triggered by a third entity (layer 3, RRC for 3GPP), and submitted to a second entity (layer 2, RLC for 3GPP) to be sent to the network, either in acknowledge mode or non-acknowledge mode. In case of network disturbances, for example in problematic areas or where the quality is low, the second entity handles possible re-transmissions until either successful acknowledgement is received from the network, that is when good quality is regained, or until the second entity stops re-transmission. Hereafter, the third entity is informed about the transmission failure and the network connection is lost. This procedure may be time consuming and, in some situations, especially during sudden coverage drops, a network connection may be lost even though network quality has been regained.

### SUMMARY

It is an object of the present invention to overcome at least some of the above described disadvantages, and provide an improved method of handling network connection disturbance(s) in a communication network. The present invention is defined by the accompanying independent claims. Preferred embodiments are defined by the dependent clams.

According to the present invention, a method of handling network connection disturbance(s) in a communication network, and a communication device implementing the method, is provided, the network having a communication device with first, second and third entities, the third entity receiving measurement results for evaluation and submission to the second entity, the method comprising, performing by the third entity:
receiving information of a network connection disturbance,
evaluating measurement results received after detection of the network connection disturbance, and
storing the evaluated measurement results in the third entity,
re-evaluating stored measurement results for validity upon network restoration,
submitting only valid measurement results to the second entity when the network connection is restored.

The present invention further provides a communication device for handling network connection disturbance(s) in a communication network, the communication device having first, second and third entities, the third entity comprising a third entity processor for evaluating measurement results, and a third entity storage configured to store evaluated measurement results for measurement results being received after receipt of information of a network connection disturbance,
wherein the third entity processor re-evaluates stored measurement results for validity upon network restoration, and submits only valid measurement results to the second entity when the network connection is restored.

It is an advantage of the present invention that the third entity, after receiving information of a communication network disturbance, stores evaluated measurement results and, thus, do not submit all evaluated measurement results to the second entity when triggered irrespective of the network connection status or quality.

It is a further advantage of the present invention that the third entity re-evaluates the stored measurement results for validity upon network restoration before submitting the measurement results to the second entity. Hereby, the communication network connection may be restored immediately after network restoration, without introducing a delay due to the handling of measurement results which are no longer valid.

The operation under normal network connection conditions is referred to as normal mode operation, whereas operation during network connection disturbances is referred to as a disturbed mode operation.

It is a further advantage of the present invention that the third entity only operates in a disturbed mode upon receiving information of a network connection disturbance and returns to normal mode operation as soon as it is detected that the network connection is restored. Hereby, no round-trip delay is introduced in the normal mode, as there is no delay before the evaluated measurement results are submitted to the second layer in the normal mode.

In some cellular communication networks, such as WCDMA and 3GPP LTE, the mobility of a communication device may be network controlled so that the network commands the communication device to go to a certain cell. The decision behind commanding a communication device to a specific cell is typically based on measurement results containing the quality of the current cell and any surrounding cells. The measurement results containing the quality of the current and any surrounding cells are normally provided by the communication device to the network. The measurement results may for example include measurement results such as the RSCP/EcNO in WCDMA, or such as RSRP/RSRQ in 3GPP Long Term Evolution (LTE).

Preferably, the third entity continuously evaluates the measurement results irrespective of the network connection status, and the third entity thus evaluates the measurement results in normal mode operation as well as in disturbed mode operation. Thereby, also any timer hysteresis, such as time-to-trigger, etc, may be continuously evaluated.

The re-evaluation of the stored measurement results for validity upon network restoration may comprise the step of checking whether a stored measurement result is still valid, and, in the affirmative, measurement result quality values may be updated before the re-evaluated measurement results are submitted to the second entity. In case it, upon re-evaluation, is determined that a stored measurement result is no longer valid, then the invalid measurement result may be discarded.

In a preferred embodiment, the third entity selects specific measurement results to be submitted to the second entity during the network connection disturbance, and submits the specific measurement results until the network connection is restored. Hereby, a specific measurement result may be submitted to the second entity before a second entity re-transmission threshold is reached. Preferably, the second entity re-transmission threshold is reset upon receiving a further specific measurement result. It is, thus, an advantage of submitting specific measurement results to the second entity during the network connection disturbance that the network connection is not lost due to the second entity reaching the re-transmission threshold.

The specific measurement results submitted to the second entity may be stored in a second entity buffer until the network connection is restored. The second entity buffer may have the capacity to store a predetermined plurality of measurement results and preferably, the third entity submits fewer than the predetermined plurality of measurement results per signalling radio bearer during the network disturbance. Thus, the third entity preferably submits fewer than the predetermined plurality of measurement results to the second entity until the second entity receives information of network restoration.

The measurement results provided from the communication device to the network may be either periodic measurement results or event-based measurement results. Both these types of measurement reporting are typically configured by the network. The periodic results may be configured and may be submitted periodically, such as approximately once per second. Typically, the periodic measurement results are configured to be submitted in a non-acknowledge mode. The event-based measurement results may be triggered by a certain event configured by the network. That is, a measurement result may be triggered when the communication device detects that a neighbouring cell's quality is becoming as good as the current cell's quality, etc. The event-based measurement results are typically configured to be reported in the acknowledge mode.

Preferably, the third entity submits less than the predetermined plurality of measurement results of type acknowledge mode per signalling radio bearer during the network disturbance. It is envisaged that the third entity may await acknowledgement of the plurality of measurement results before submitting new results, or the third entity may await acknowledgement of a predetermined fraction of the predetermined plurality of measurement results before submitting new results. In this case, it is preferred that that only a number of measurement results corresponding to the predetermined plurality of measurement results subtracted said fraction is submitted to the second entity so as not to exceed the predetermined plurality of measurement results, and thereby not overfill the second entity buffer.

The third entity may furthermore be configured to submit new measurement results of type acknowledge mode only after receipt of at least one acknowledgement of receipt. The network connection may be considered restored when at least one acknowledgement of receipt is received by the communication device, such as by the second entity.

The third entity may receive information of a network connection disturbance at any instance where the network connection is not optimized. The determination of a network connection disturbance, and thus the instances in which the third entity receives information of a network connection disturbance may comprise any one or any combination of the following instances:
a) a measured cell quality of a current cell connected to the communications device is below a certain threshold,
b) a block error rate of the reception at the communication device is above a threshold value, and/or
c) a second entity re-transmission time has exceeded a second retransmission threshold.

It is envisaged that the third entity may furthermore implement a backup mechanism, such as a timer, which is activated after a number of measurement results have been submitted to the second entity in the disturbed mode. The timer may be activated when the predetermined plurality of measurement results have been submitted to the second entity.

The second entity re-transmission system may comprise a buffer and a counter. The buffer may hold the predetermined plurality of measurement results and the counter may be a counter being incremented per retransmission of each higher layer measurement result. Upon reaching a threshold value configured by the network, the second entity may stop further re-transmissions. The counter may be implemented to re-start from 0 for every new higher layer data unit submitted, e.g. for every measurement report submitted from the third entity. It is therefore advantageously if the third entity at e.g. pre-set time intervals submits a specified measurement result to the second entity to thereby re-start the counter from 0. The pre-set time intervals may be realised by the third entity backup mechanism, such as a timer. Preferably, the value or pre-set time intervals of the backup mechanism is based on the configuration the network has applied to the second entity, the configuration comprising re-transmission amount, retransmission time-out and total re-transmission window size.

It is an advantage of using a third entity backup mechanism that the time before the second entity stops re-transmission and therefore the time before the network connection is lost may be increased.

After network restoration, a number of valid measurement results in the third entity may await submission. However, as the number of valid measurement results may not be sent simultaneously, it may be beneficial to prioritize the submitting order of the valid measurement reports awaiting submission. The valid measurement reports may be prioritized according to specific selection criteria, such as their ability to maintain the network connection, such as their ability to add cells to an active set of cells, etc. Preferably, the valid measurement results most beneficial for maintaining the network connection are submitted firstly. For example, amongst simultaneously queued or buffered measurement results of type 3GPP WCDMA event 1A, i.e. a neighbouring cell's quality is getting close to the serving cell's quality, and 1 B, i.e. an active cell's quality is getting worse than other active cell's quality, the third entity would prioritize 1A over 1 B, and thereby submitting 1A before 1 B. In response hereto, the network would first add a new cell the current active set (1A), before removing a cell from the active set (1B), keeping the active set as large as possible at all times.

The term communication device is intended to comprise any electronic equipment, portable radio communications equipment, and other handheld or portable devices. The term portable radio communications equipment includes all equipment such as mobile terminals, e.g. mobile telephones, pagers, communicators, electronic organisers, smart phones, personal digital assistants (PDAs), handheld computers, tablet computers, or the like. The term processor is intended to comprise any integrated circuits, microprocessors, chips or chipsets for use in telecommunications equipment.

### BRIEF DESCRIPTION OF THE DRAWINGS

The above and other aspects will be apparent and elucidated from the embodiments described with reference to the drawing in which:
Fig. 1 shows schematically a communication device according to the invention,
Fig. 2 shows a flowchart of a method according to the present invention, and
Fig. 3 shows schematically a 3GPP WCDMA configuration.

### DETAILED DESCRIPTION OF THE DRAWINGS

In some cellular communication networks, such as WCDMA and 3GPP Long Term Evolution (LTE), the mobility of a communication device may be network controlled so that the network commands the communication device to go to a certain cell. The decision behind commanding a communication device to a specific cell is typically based on measurement results containing the quality of the current cell and any surrounding cells. The measurement results containing the quality of the current and any surrounding cells are normally provided by the communication device to the network. The measurement results may for example include measurement results such as the RSCP/EcNO in WCDMA, or such as RSRP/RSRQ in LTE.

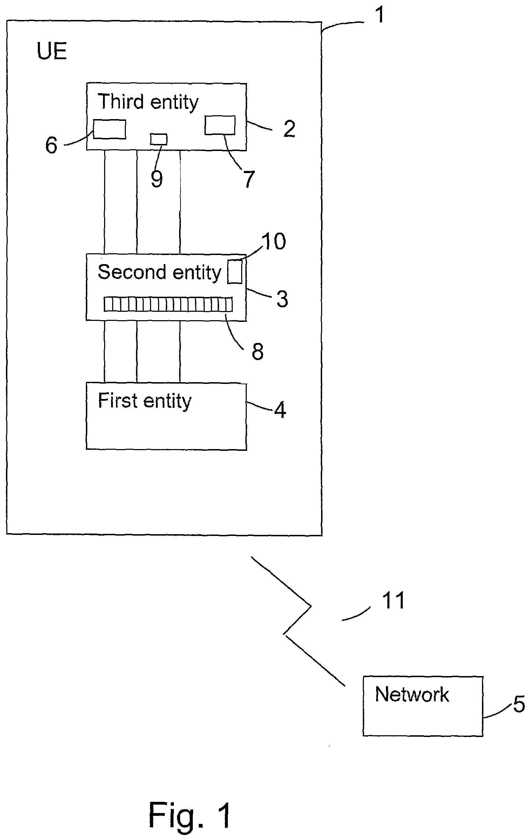

Fig. 1 shows schematically a communication device 1 for handling network connection disturbance(s) in a communication network, such as in a cellular communication network 5.

The communication device 1 has a first entity 4, a second entity 3, and a third entity 2 implementing e.g. layer 1, layer 2 and layer 3 of a WCDMA or 3GPP network. The third entity 2 comprises a third entity processor 6 for evaluating measurement results, and a third entity storage 7 configured to store evaluated measurement results for measurement results being received after receipt of information of a network connection disturbance. The third entity processor 6 further re-evaluates stored measurement results for validity upon network restoration, and submits only valid measurement results to the second entity 3 when the network connection is restored. The communication device 1 is connected to network 5 via network connection 11.

The second entity 3 comprises a buffer 8 for buffering or queuing measurement results received from the third entity 2. The buffer 8 is configured to hold a predetermined plurality of measurement results x, with x being any integer. During the disturbed mode, the third entity 2 submits a maximum of x measurement results to the second entity 3 per signalling radio bearer of type acknowledge mode to the second entity 3 until the second entity 3 receives an acknowledgement from the network 7, such as from the peer entity on the network side. The third entity 2 may await full acknowledgement of all x sent measurement results before submitting further measurement results. Alternatively, the third entity 2 awaits only y acknowledgements, y being an integer and y<x. However, in this case the third entity 2 submits only x-y new results to the second entity in order not to exceed x.

The third entity 2 further implements a backup mechanism 9, in the present example a timer of N ms, but the backup mechanism 9 may be implemented in any other known way. The timer 9 is started after the x measurement results have been submitted to the second entity. At a time-out for the timer, the third entity may be allowed to submit new measurement result(s) to the second entity 3. The backup mechanism 9 may benefit the communication device since, typically, the second entity 3 is configured to re-transmit until a certain threshold is used where after no further re-transmissions are sent. The threshold may be implemented as a counter 10 which is incremented per re-sent higher layer data unit. As this counter starts from 0 for every new higher layer data unit submitted, the counter may be kept activated for a longer time, provided the third entity 2 submits measurement results at time intervals. Hereby, it may take longer time before the second entity stops retransmission because a maximum number of re-transmissions is reached. The second entity may still stop re-transmission because e.g. a maximum transmission time is exceeded.

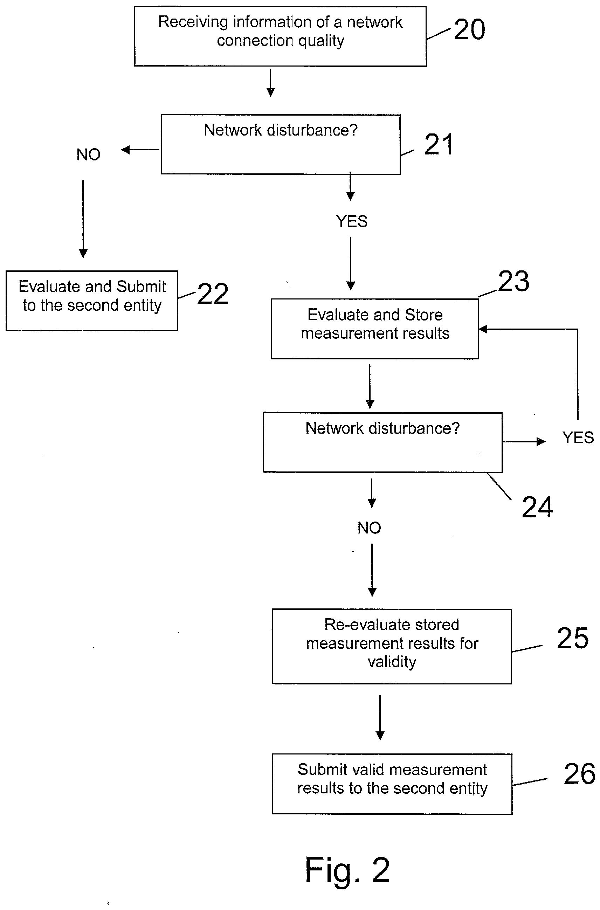

Fig. 2 shows a flow chart describing the method of the invention in more detail, the method being implemented by the third entity 2. In step 20, the third entity 2 receives information of a network connection quality, and may on the basis of the network connection quality determine whether there is a network disturbance or not, step 21. In case no network disturbance is detected, incoming measurement results are evaluated and submitted to the second entity. In case a network disturbance is present, the third entity evaluates and stores the evaluated measurement results 23, and the network condition is monitored. As long as the network disturbance is present, the third entity operates in a disturbed network mode 24. As soon as the network connection is restored, the stored measurement results are re-evaluated for validity 25, and the valid measurement results are submitted to the second entity. It is envisaged that the disturbed mode operation may also be triggered by an event, and likewise the information about the network connection restoration may also be provided in the form of an event message, triggering the move from step 24 to step 25 where the stored measurement results are re-evaluated. In step 26, the valid measurement results are submitted to the second entity.

It is an advantage of the present method that there is no, or substantially no, impact on the normal mode operation.

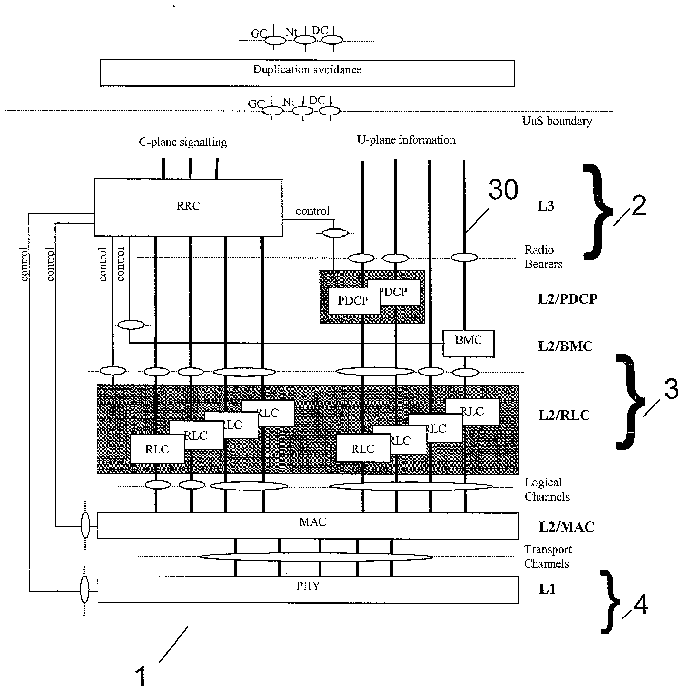

The method and the communication device implementing the method may be used with any network type, such as WCDMA, such as 3GPP, such as 3GPP LTE, etc. An exemplary embodiment of such a network system implementing the method and the device according to the 3GPP standard is shown in Fig. 3. The communication device 1 has a third entity comprising the L3, Layer 3, and the RRC, the Radio Resource Control. The third entity comprising the RRC protocol handles the Layer 3 control plane signalling by which the network controls the communication device behaviour. The second entity comprises at least the Layer 2/RLC, the Radio Link Control, but may also comprise one or more of the layer 2 elements, such as the L2/PDCP, the L2/BMC, the L2/MAC, etc. The second entity comprising at least the radio link control handles the segmentation and re-assembly of upper layer packets (e.g. layer 3 packets) in order to adapt them to a size which may be transmitted over the radio interface. The second entity comprising the RLC layer also performs re-transmission to recover from packet losses. The communication between the third entity and the second entity is performed via radio bearers 30. The second entity comprising the RLC layer transmits the messages to the first entity being the physical layer. It defines the means of transmitting raw bits rather than logical data packets over a physical link to the network.

Although some embodiments have been described and shown in detail, the invention is not restricted to them, but may also be embodied in other ways within the scope of the subject matter defined in the following claims.

The method, product means, and device described herein can be implemented by means of hardware comprising several distinct elements, and/or partly or completely by means of a suitably programmed microprocessor. In the device claims enumerating several means, several of these means can be embodied by one and the same item of hardware, e.g. a suitably programmed microprocessor, one or more digital signal processor, or the like. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method of handling network connection disturbances in a communication network, the network having a communication device (1) and wherein mobility of the communication device is controlled by the communication network so that the communication network commands the communication device to go to a certain cell based on measurement results received by the network from the communication device, the communication device having first (4), second (3) and third (2) entities, the third entity (2) comprising a Radio Resource Control and receiving measurement results for evaluation and submission to the second entity (3), the second entity comprising a Radio Link Control, the first entity being a physical layer, the method comprising, performing by the third entity (2):
receiving information of a network connection disturbance,
evaluating measurement results received after detection of the network connection disturbance,
the method being **characterized by** storing the evaluated measurement results in the third entity (2), re-evaluating stored measurement results for validity upon network restoration,
submitting only valid measurement results to the second entity (3) when the network connection is restored

2. A method according to claim 1, wherein the third entity (2) selects specific measurement results to be submitted to the second entity (3) during the network connection disturbance, and submits the specific measurement results until the network connection is restored.

3. A method according to claim 2, wherein a specific measurement result is submitted to the second entity (3) before a second entity re-transmission threshold is reached.

4. A method according to claims 2 or 3, wherein the specific measurement results submitted to the second entity (3) are stored in a second entity buffer (8) until the network connection is restored.

5. A method according to any of the previous claims, wherein the second entity buffer (8) has capacity to store a predetermined plurality of measurement results and wherein the third entity (2) submits fewer than the predetermined plurality of measurement results per signalling radio bearer (30) of type acknowledge mode during the network disturbance.

6. A method according to claim 5, wherein the third entity (2) awaits acknowledgement of the plurality of measurement results before submitting new results.

7. A method according to claim 5, wherein the third entity (2) awaits acknowledgement of a predetermined fraction of the predetermined plurality of measurement results before submitting new results.

8. A method according to any of the previous claims, wherein the network connection is considered restored when at least one acknowledgement of receipt is received by the third entity (2).

9. A method according to any of the previous claims, wherein the measurement results are periodic measurement results or event triggered measurement results.

10. A method according to any of the previous claims, wherein information of a network connection disturbance is received upon:
a) a measured cell quality of a current cell connected to the communications device is below a certain threshold,
b) a block error rate of the reception at the communication device is above a threshold value, and/or
c) a second entity re-transmission time has exceeded a second retransmission threshold.

11. A method according to any of the previous claims, wherein the re-evaluation of the stored measurement results for validity comprises updating measurement result quality values before submission.

12. A method according to any of the previous claims, wherein a number of valid measurement results in the third entity (2) await submission after network connection restoration and wherein the submitting order of the valid measurement results is prioritized before submission.

13. A method according to any of the previous claims, wherein the valid measurement results are prioritized according to specific selection criteria.

14. A communications device adapted to perform the steps of the method defined in any one of claims 1 through 13.

15. A communication device according to claim 14, for handling network connection disturbances in a communication network, the communication device having first (4), second (3) and third (2) entities, the first entity (4) being a physical layer, the second entity (3) comprising a radio link control, the third entity (2) comprising
a radio resource control,
a processor (6) for evaluating measurement results,
a third entity storage (7) configured to store evaluated measurement results for measurement results being received after receipt of information of a network connection disturbance,
wherein the third entity processor (6) re-evaluates stored measurement results for validity upon network restoration, and submits only valid measurement results to the second entity (3) when the network connection is restored to allow the communication network to command a communication device to go to a certain cell based on the measurement results.

## Patentansprüche

1. Verfahren zur Handhabung von Netzverbindungsstörungen in einem Kommunikationsnetz, wobei das Netz eine Kommunikationsvorrichtung (1) aufweist, und wobei Mobilität der Kommunikationsvorrichtung durch das Kommunikationsnetz so gesteuert wird, dass das Kommunikationsnetz der Kommunikationsvorrichtung basierend auf Messergebnissen, die durch das Netz von der Kommunikationsvorrichtung empfangen werden, befiehlt, zu einer bestimmten Zelle zu gehen, die Kommunikationsvorrichtung erste (4), zweite (3) und dritte (2) Instanzen aufweist, die dritte Instanz (2) eine Funkressourcensteuerung umfasst und Messergebnisse zur Bewertung und Zustellung an die zweite Instanz (3) empfängt, die zweite Instanz eine Funkübertragungssteuerung umfasst, die erste Instanz eine physikalische Schicht ist, und das Verfahren ein Durchführen von Folgendem durch die dritte Instanz (2) umfasst:
Empfangen von Informationen einer Netzverbindungssteuerung,
Bewerten von Messergebnissen, die nach Erkennung der Netzverbindungsstörung empfangen werden,
wobei das Verfahren **gekennzeichnet durch**:
Speichern der bewerteten Messergebnisse in der dritten Instanz (2),
Neubewerten von gespeicherten Messergebnissen hinsichtlich Gültigkeit bei Netzwiederherstellung,
nur Zustellen gültiger Messergebnisse an die zweite Instanz (3), wenn die Netzverbindung wiederhergestellt wird.

2. Verfahren nach Anspruch 1, wobei die dritte Instanz (2) spezifische Messergebnisse zum Zustellen an die zweite Instanz (3) während der Netzverbindungsstörung auswählt und die spezifischen Messergebnisse zustellt, bis die Netzverbindung wiederhergestellt wird.

3. Verfahren nach Anspruch 2, wobei ein spezifisches Messergebnis an die zweite Instanz (3) zugestellt wird, bevor eine Wiederholungssendungsschwelle der zweiten Instanz erreicht wird.

4. Verfahren nach Anspruch 2 oder 3, wobei die spezifischen Messergebnisse, die an die zweite Instanz (3) zugestellt werden, in einem Puffer (8) der zweiten Instanz gespeichert werden, bis die Netzverbindung wiederhergestellt wird.

5. Verfahren nach einem der Ansprüche, wobei der Puffer (8) der zweiten Instanz Kapazität aufweist, um eine vorbestimmte Mehrzahl von Messergebnissen zu speichern, und wobei die dritte Instanz (2) weniger als die vorbestimmte Mehrzahl von Messergebnissen pro Signalisierungsfunkträger (30) vom Typ Bestätigungsmodus während der Netzstörung zustellt.

6. Verfahren nach Anspruch 5, wobei die dritte Instanz (2) vor dem Zustellen neuer Ergebnisse auf Bestätigung der Mehrzahl von Messergebnissen wartet.

7. Verfahren nach Anspruch 5, wobei die dritte Instanz (2) vor dem Zustellen neuer Ergebnisse auf Bestätigung eines vorbestimmten Teils der Mehrzahl von Messergebnissen wartet.

8. Verfahren nach einem der vorhergehenden Ansprüche, wobei die Netzverbindung als wiederhergestellt gilt, wenn mindestens eine Empfangsbestätigung durch die dritte Instanz (2) empfangen wird.

9. Verfahren nach einem der vorhergehenden Ansprüche, wobei die Messergebnisse periodische Messergebnisse oder ereignisgesteuerte Messergebnisse sind.

10. Verfahren nach einem der vorhergehenden Ansprüche, wobei Informationen einer Netzverbindungsstörung empfangen werden, wenn:
a) eine gemessene Zellqualität einer aktuellen Zelle, die mit der Kommunikationsvorrichtung verbunden ist, unter einer bestimmten Schwelle ist,
b) eine Blockfehlerrate des Empfangs an der Kommunikationsvorrichtung über einem Schwellenwert ist, und/oder
c) eine Wiederholungssendungszeit der zweiten Instanz eine zweite Wiederholungssendungsschwelle überschritten hat.

11. Verfahren nach einem der vorhergehenden Ansprüche, wobei die Neubewertung der gespeicherten Messergebnisse hinsichtlich Gültigkeit ein Aktualisieren von Messergebnisqualitätswerten vor der Zustellung umfasst.

12. Verfahren nach einem der vorhergehenden Ansprüche, wobei eine Anzahl von gültigen Messergebnissen in der dritten Instanz (2) auf Zustellung nach Netzwiederherstellung wartet, und wobei die Zustellungsreihenfolge der gültigen Messergebnisse vor der Zustellung priorisiert wird.

13. Verfahren nach einem der vorhergehenden Ansprüche, wobei die gültigen Messergebnisse gemäß spezifischen Auswahlkriterien priorisiert werden.

14. Kommunikationsvorrichtung, die so ausgelegt ist, dass sie die Schritte des Verfahrens nach einem der Ansprüche 1 bis 13 ausführt.

15. Kommunikationsvorrichtung nach Anspruch 14 zum Handhaben von Netzverbindungsstörungen in einem Kommunikationsnetz, wobei die Kommunikationsvorrichtung erste (4), zweite (3) und dritte (2) Instanzen aufweist, die erste Instanz (4) eine physikalische Schicht ist, die zweite Instanz (3) eine Funkübertragungssteuerung umfasst, und die dritte Instanz (2) umfasst:
eine Funkressourcensteuerung,
einen Prozessor (6) zum Bewerten von Messergebnissen,
einen Speicher (7) der dritten Instanz, der so ausgelegt ist, dass er bewertete Ergebnisse für Messergebnisse speichert, die nach dem Empfang von Informationen einer Netzverbindungsstörung empfangen werden,
wobei der Prozessor (6) der dritten Instanz gespeicherte Messergebnisse bei Netzwiederherstellung hinsichtlich Gültigkeit neu bewertet und nur gültige Messergebnisse an die zweite Instanz (3) zustellt, wenn die Netzverbindung wiederhergestellt wird, um zu ermöglichen, dass das Kommunikationsnetz einer Kommunikationsvorrichtung basierend auf den Messergebnissen befiehlt, zu einer bestimmten Zelle zu gehen.

## Revendications

1. Procédé de gestion de perturbations de connexion de réseau dans un réseau de communication, le réseau comportant un dispositif de communication (1) et dans lequel une mobilité du dispositif de communication est régie par le réseau de communication de sorte que le réseau de communication commande au dispositif de communication de se rendre dans une certaine cellule sur la base de résultats de mesure reçus par le réseau en provenance du dispositif de communication, le dispositif de communication comportant une première entité (4), une deuxième entité (3) et une troisième entité (2), la troisième entité (2) comprenant une commande de ressources radio et recevant des résultats de mesure pour l'évaluation et la soumission à la deuxième entité (3), la deuxième entité comprenant une commande de liaison radio, la première entité étant une couche physique, le procédé comprenant l'exécution par la troisième entité (2) de :
la réception d'informations d'une perturbation de connexion de réseau,
l'évaluation de résultats de mesure reçus après une détection de la perturbation de connexion de réseau,
le procédé étant **caractérisé par** :
la mémorisation des résultats de mesure évalués dans la troisième entité (2),
la réévaluation des résultats de mesure mémorisés en ce qui concerne leur validité à un rétablissement de réseau,
la soumission uniquement des résultats de mesure valables à la deuxième entité (3) lorsque la connexion de réseau est rétablie.

2. Procédé selon la revendication 1, dans lequel la troisième entité (2) sélectionne des résultats de mesure spécifiques à soumettre à la deuxième entité (3) au cours de la perturbation de connexion de réseau, et soumet les résultats de mesure spécifiques jusqu'au rétablissement de la connexion de réseau.

3. Procédé selon la revendication 2, dans lequel un résultat de mesure spécifique est soumis à la deuxième entité (3) avant qu'un seuil de retransmission de deuxième entité ne soit atteint.

4. Procédé selon la revendication 2 ou 3, dans lequel les résultats de mesure spécifiques soumis à la deuxième entité (3) sont mémorisés dans une mémoire tampon de deuxième entité (8) jusqu'au rétablissement de la connexion de réseau.

5. Procédé selon l'une quelconque des revendications précédentes, dans lequel la mémoire tampon de deuxième entité (8) a une capacité pour mémoriser une pluralité prédéterminée de résultats de mesure et dans lequel la troisième entité (2) soumet moins que la pluralité prédéterminée de résultats de mesure par support radio de signalisation (30) de mode d'accusé de réception type au cours de la perturbation de réseau.

6. Procédé selon la revendication 5, dans lequel la troisième entité (2) attend un accusé de réception de la pluralité de résultats de mesure avant de soumettre de nouveaux résultats.

7. Procédé selon la revendication 5, dans lequel la troisième entité (2) attend un accusé de réception d'une fraction prédéterminée de la pluralité prédéterminée de résultats de mesure avant de soumettre de nouveaux résultats.

8. Procédé selon l'une quelconque des revendications précédentes, dans lequel la connexion de réseau est considérée comme étant rétablie lorsqu'au moins un accusé de réception est reçu par la troisième entité (2).

9. Procédé selon l'une quelconque des revendications précédentes, dans lequel les résultats de mesure sont des résultats de mesure périodiques ou des résultats de mesure déclenchés par un événement.

10. Procédé selon l'une quelconque des revendications précédentes, dans lequel des informations d'une perturbation de connexion de réseau sont reçues si :
a) une qualité de cellule mesurée d'une cellule actuelle connectée au dispositif de communication est inférieure à un certain seuil,
b) un taux d'erreur de bloc de la réception au dispositif de communication est supérieur à une valeur de seuil, et/ou
c) un temps de retransmission de deuxième entité a dépassé un deuxième seuil de retransmission.

11. Procédé selon l'une quelconque des revendications précédentes, dans lequel la réévaluation des résultats de mesure mémorisés en ce qui concerne leur validité comprend la mise à jour de valeurs de qualité de résultats de mesure avant une soumission.

12. Procédé selon l'une quelconque des revendications précédentes, dans lequel un nombre de résultats de mesure valables dans la troisième entité (2) attend une soumission après un rétablissement de connexion de réseau et dans lequel l'ordre de soumission des résultats de mesure valables est priorisé avant une soumission.

13. Procédé selon l'une quelconque des revendications précédentes, dans lequel les résultats de mesure valables sont priorisés en fonction de critères de sélection spécifiques.

14. Dispositif de communication apte à effectuer les étapes du procédé selon l'une quelconque des revendications 1 à 13.

15. Dispositif de communication selon la revendication 14, pour la gestion de perturbations de connexion de réseau dans un réseau de communication, le dispositif de communication comportant une première entité (4), une deuxième entité (3) et une troisième entité (2), la première entité (4) étant une couche physique, la deuxième entité (3) comprenant une commande de liaison radio, la troisième entité (2) comprenant :
une commande de ressources radio,
un processeur (6) pour l'évaluation de résultats de mesure,
une mémoire de troisième entité (7) configurée pour la mémorisation de résultats de mesure évalués pour des résultats de mesure reçus après la réception d'informations d'une perturbation de connexion de réseau,
dans lequel le processeur de troisième entité (6) effectue la réévaluation de résultats de mesure mémorisés en ce qui concerne leur validité à un rétablissement de réseau, et la soumission uniquement des résultats de mesure valables à la deuxième entité (3) lorsque la connexion de réseau est rétablie, pour permettre au réseau de communication de commander à un dispositif de communication de se rendre dans une certaine cellule sur la base des résultats de mesure.
